# EUROPEAN PATENT APPLICATION

(11) **EP 1 486 574 A1**
(43) Date of publication of application: **15.12.2004**
(21) Application number: 03707128.9
(22) Date of filing: 27.02.2003
(51) Int. Cl.: C21D 9/46, C22C 38/04, C22C 38/38, C23C 2/40

(54) **PROCESS FOR PRODUCING HIGH TENSILE HOT-DIP ZINC-COATED STEEL SHEET OF EXCELLENT DUCTILITY AND ANTIFATIGUE PROPERTIES**

(30) Priority: 18.03.2002 JP 2002073815
(71) Applicant: JFE Steel Corporation, Tokyo, 100-0011 (JP)
(72) Inventor: NAKAGAITO, Tatsuya, c/o Intellectual Property Dept, Chiyoda-ku, Tokyo 100-011 (JP); SHIMIZU, Tetsuo, c/o Intellectual Property Dept, Chiyoda-ku, Tokyo 100-011 (JP); SAKATA, Kei, c/o Intellectual Property Dept, Chiyoda-ku, Tokyo 100-0011 (JP)
(74) Representative: Grünecker, Kinkeldey, Stockmair & Schwanhäusser Anwaltssozietät
(86) International application number: PCT/JP2003/002190
(87) International publication number: WO 2003/078668

(57) **Abstract**

A hot-rolled sheet has a composition which contains 0.05 to 0.20 mass percent of C, 0.3 to 1.8 mass percent of Si, 1.0 to 3.0 mass percent of Mn, and the balance of Fe and inevitable impurities, and has a composite texture which contains a primary phase of ferrite and a secondary phase. The secondary phase contains 80 percent by volume or more of bainite and the balance composed of at least one of martensite, retained austenite, and perlite, and the ratio of the average length of the secondary phase in the thickness direction to that in the rolling direction is 0.7 or more. The hot-rolled steel sheet described above, which is used as a raw material, is processed by cold rolling and is then further processed by predetermined heat treatment, hot-dip zinc plating treatment, and cooling treatment. As a result, a high tensile hot-dip zinc-plated steel sheet can be obtained having sufficient ductility used as a raw material for automobile parts and superior fatigue resistance.

## Description

### Technical Field

The present invention relates high tensile hot-dip zinc-plated steel sheets, and more particularly, relates to a high tensile hot-dip zinc-plated steel sheet manufactured in a continuous hot-dip zinc plating line.

### Background Art

In recent years, in view of global environment conservation, improvement in fuel consumption of automobiles has been required, and in addition, in order to protect passengers in collision, improvement in safety of automobile bodies has also been required. Accordingly, decrease in weight and increase in strength of automobile bodies have been aggressively performed. In order to achieve the decrease in weight and the increase in strength of automobile bodies at the same time, increase in strength of a raw material for forming parts is effective, and hence high tensile steel sheets have been positively used as a raw material for automobile parts.

In addition, since a great number of automobile parts using steel sheets as a raw material are formed by press working, steel sheets for automobile parts are required to have excellent press workability. In order to realize excellent press workability, it is important to ensure superior ductility, and hence high tensile steel sheets for automobile parts are strongly required to have superior ductility.

As a high tensile steel sheet having superior ductility, a matrix strengthening type steel sheet composed of a composite texture including ferrite and a low-temperature transformation phase has been proposed. As the matrix strengthening type steel sheet, a dual-phase texture steel sheet comprising a composite texture of ferrite and martensite may be mentioned by way of example. In addition, in recent years, a highly ductile steel sheet exploiting transformation-induced plasticity resulting from retained austenite has also become practicable.

In addition, high corrosion resistance may also be required for automobile parts in some cases depending on positions at which the parts are to be used. As a raw material for parts which will be used at the positions mentioned above, a hot-dip zinc-plated steel sheet represented by an alloyed hot-dip zinc-plated steel sheet is preferably used.

Accordingly, in order to facilitate the decrease in weight and the increase in strength of automobile bodies, a high tensile hot-dip zinc-plated steel sheet having high corrosion resistance and superior ductility must be essential as a raw material.

In recent years, a large number of hot-dip zinc-plated steel sheets have been manufactured in continuous hot-dip zinc plating lines. In these hot-dip plating lines mentioned above, an annealing facility and a plating facility are continuously installed in many cases, and since plating is performed after annealing, cooling performed after the annealing is interrupted by the plating. As a result, it has been difficult to increase an average cooling rate in the entire process.

That is, for high tensile hot-dip zinc-plated steel sheets manufactured in continuous hot-dip zinc plating lines, it has been difficult to contain martensite and retained austenite after plating, which are generally produced under a cooling condition in which the cooling rate is high.

In continuous hot-dip zinc plating lines, as a method for manufacturing a matrix strengthening type high tensile hot-dip zinc-plated steel sheet, a method has been known in which a large amount of an alloying element, such as Cr or Mo, for improving the hardening properties is added so as to facilitate the production of a low-temperature transformation phase such as martensite. However, the addition of a large amount of an alloying element disadvantageously increases the manufacturing cost.

In addition, a method for manufacturing a high tensile hot-dip zinc-plated steel sheet having superior ductility has been proposed in Japanese Unexamined Patent Application Publication No. 2001-3150. In the method described above, after a steel sheet containing 0.05 to 0.20 mass percent of C, 1.0 to 3.0 mass percent of Mn, and 0.3 to 1.8 mass percent of Si is treated by a first process including first heating treatment followed by quenching to an Ms point or less and is then treated by a second process including second heating treatment followed by quenching, a third step including hot-dip zinc plating treatment followed by quenching is carried out, thereby forming a composite texture composed of tempered martensite, retained austenite, ferrite, and a low-temperature transformation phase. According to the technique disclosed in Japanese Unexamined Patent Application Publication No. 2001-3150, superior ductility can be obtained; however, the steel sheet thus obtained still has a problem of fatigue resistance.

An object of the present invention is to solve the problems of the conventional techniques described above and is to propose a manufacturing method of a high tensile hot-dip zinc-plated steel sheet which has sufficient ductility as a raw material for automobile parts and which also has superior fatigue resistance.

### Disclosure of Invention

In order to solve the problems described above, the inventors of the present invention carried out intensive research on a method for manufacturing a high tensile hot-dip zinc-plated steel sheet having superior ductility using a continuous hot-dip zinc plating line in consideration of the composition of a steel sheet and the microscopic texture thereof. As a result, it was found that a steel sheet having superior ductility and fatigue resistance can be obtained when chemical components and the texture of a hot-rolled sheet used as a raw material are controlled so that a high tensile hot-dip zinc-plated steel sheet obtained by the steps of cold rolling, heat treatment, and hot-dip zinc plating has a composite texture including tempered martensite, retained austenite, and the balance formed of ferrite and a low-temperature transformation phase.

In addition, it was also found that the composite texture including tempered martensite, retained austenite, and the balance formed of ferrite and a low-temperature transformation phase can be obtained as a texture of a steel sheet when the hot-rolled sheet used as a raw material, in which the chemical components and the texture are controlled, is formed to have a texture containing lath-shaped martensite and is then processed by reheating treatment and plating treatment under predetermined conditions in a continuous hot-dip zinc plating line.

Furthermore, it was also found that, since the texture containing lath-shaped martensite is first formed, austenite produced in subsequent tempering treatment can be finely dispersed, the concentration of C can be easily increased in the austenite, and the amount of the retained γ thus obtained is increased because of the austenite stabilized by finer grains. As a result, a high tensile hot-dip zinc-plated steel sheet having extremely superior ductility and fatigue resistance can be obtained.

The present invention was made based on the findings described above.

Accordingly, the aspects of the present invention are as follows.
(1) In a method for manufacturing a high tensile hot-dip zinc-plated steel sheet having superior ductility and fatigue resistance, a hot-rolled steel is used as a raw material which has the composition containing 0.05 to 0.20 mass percent of C, 0.3 to 1.8 mass percent of Si, 1.0 to 3.0 mass percent of Mn, and the balance of Fe and inevitable impurities and a composite texture composed of a primary phase of ferrite and a secondary phase, the secondary phase including 80 percent by volume or more of bainite and the balance containing at least one of martensite, retained austenite, and perlite, the ratio of the average length of the secondary phase in the thickness direction to that in the rolling direction being 0.7 or more. The method described above comprises: cold-rolling the hot-rolled sheet; then performing first heating treatment at a temperature of an A_{c1} transformation point or more for 5 seconds or more; then cooling the steel sheet to an Ms point or less at a cooling rate of 10 °C/s or more; then performing second heating treatment at a temperature in the range from the A_{c1} transformation point to the first heating temperature for 5 to 120 seconds; then performing cooling to a temperature of 500°C or less at a cooling rate of 5 °C/s or more, followed by hot-dip zinc plating treatment; and then performing cooling to a temperature of 300°C at a cooling rate of 5 °C/s or more.
(2) A method for manufacturing a high tensile hot-dip zinc-plated steel sheet having superior ductility and fatigue resistance, comprises heating a steel material having the composition containing 0.05 to 0.20 mass percent of C, 0.3 to 1.8 mass percent of Si, 1.0 to 3.0 mass percent of Mn, and the balance of Fe and inevitable impurities, followed by hot rolling; cooling the hot-rolled steel sheet at a cooling rate of 10 °C/s or more; coiling the cooled steel sheet at a temperature of 300 to 550°C so as to perform cold rolling; then performing first heating treatment at a temperature of an A_{c1} transformation point or more for 5 seconds or more; cooling the steel sheet to an Ms point or less at a cooling rate of 10 °C/s or more; performing second heating treatment at a temperature in the range of from the A_{c1} transformation point to the first heating temperature for 5 to 120 seconds; performing cooling to a temperature of 500°C or less at a cooling rate of 5 °C/s or more, followed by hot-dip zinc plating treatment; and performing cooling to a temperature of 300°C at a cooling rate of 5 °C/s or more.
(3) In the method for manufacturing a high tensile hot-dip zinc-plated steel sheet having superior ductility and fatigue resistance, according to the above (1) or (2), after the hot-dip zinc-plated film is formed by the hot-dip zinc plating treatment, reheating is performed at a temperature in the range of from 400 to 550°C for alloying the hot-dip zinc-plated film.

In the method for manufacturing a high tensile hot-dip zinc-plated steel sheet having superior ductility and fatigue resistance, according to one of the above (1), (2), and (3), the steel material has a composition further containing at least one component selected from the group consisting of the following (a) to (e).

The components described above are:
(a) Al at a content of 0.2 to 1.5 mass percent;
(b) at least one of Cr and Mo at a total content of 0.05 to 1.0 mass percent;
(c) B at a content of 0.003 mass percent or less;
(d) at least one selected from the group consisting of Ti, Nb, and V at a total content of 0.01 to 0.3 mass percent; and
(e) at least one of Ca and REM at a total content of 0.01 mass percent or less.

### Best Mode for Carrying Out the Invention

Hereinafter, steps of a manufacturing method according to the present invention will be described in a sequential order from the start.

First, the reasons the composition of a steel sheet used as a raw material is defined will be described. C: 0.05 to 0.20 mass percent

Carbon is an essential element to increase the strength of a steel sheet, and in addition, by the presence of carbon, since retained austenite and a low-temperature transformation phase are effectively produced, carbon is absolutely necessary. However, when the C content is less than 0.05 mass percent, a desired increase in strength cannot be obtained, and on the other hand, when the content is more than 0.20 mass percent, the weldability is degraded; hence, the C content is defined in the range of from 0.05 to 0.20 mass percent.

### Mn; 1.0 to 3.0 mass percent

In addition to an effect of increasing the strength of steel by solid solution strengthening, Mn has an effect of improving the hardening properties of steel and has an effect of facilitating the production of retained austenite and a low-temperature transformation phase. The effects described above can be obtained when the Mn content is 1.0 mass percent or more. On the other hand, even when the content is more than 3.0 mass percent, the effect is not further improved, and the advantage appropriate to the content cannot be further expected, resulting in increase in cost. Hence, the Mn content is defined in the range of from 1.0 to 3.0 mass percent.

### Si: 0.3 to 1.8 mass percent

In addition to an effect of increasing the strength of steel by solid solution strengthening, Si has an effect of suppressing the production of carbides and an effect of facilitating the production of a retained austenite phase. The effects described above can be obtained when the Si content is 0.3 mass percent or more. On the other hand, when the Si content is more than 1.8 mass percent, the platability is seriously degraded. Hence, the Si content is defined in the range of from 0.3 to 1.8 mass percent.

Furthermore, in the present invention, in addition to the above-described chemical components, at least one of the following (a) to (e) components may be further added whenever necessary.

### (a): Al: 0.2 to 1.5 mass percent

As is Si, Al has an effect of suppressing the production of carbides and an effect of facilitating the production of a retained austenite phase. The effects described above can be obtained when the Al content is 0.2 mass percent or more. On the other hand, when the content is more than 1.5 mass percent, the amount of interstitial materials in steel is increased, and as a result, the ductility is degraded. Hence, the Al content is preferably defined in the range of from 0.2 to 1.5 mass percent.

### (b): at least one of Cr and Mo at the total content of 0.05 to 1.0 mass percent

Cr and Mo are elements each having an effect of improving the hardening properties of steel and an effect of facilitating the production of a low-temperature transformation phase. The effects described above can be obtained when at least one of Cr and Mo is contained at the total content of 0.05 mass percent or more. On the other hand, even when the total content of at least one of the elements described above is more than 1.0 mass percent, the effects described above cannot be further improved, and the advantages appropriate to the content cannot be expected, causing economical disadvantages. Hence, the total content of at least one of Cr and Mo is preferably defined in the range of from 0.05 to 1.0 mass percent.

### (c): B: 0.003 mass percent or less

B is an element having an effect of improving the quench hardening properties of steel and may be added whenever necessary. However, when the B content is more than 0.003 mass percent, the effect is not further improved; hence, the B content is preferably defined to be 0.003 mass percent or less. More preferably, B may be added at the content in the range of from 0.001 to 0.002 mass percent.

### (d): at least one of Ti, Nb, and V at the total content of 0.01 to 0.3 mass percent

Ti, Nb, and V each form a carbonitride and have an effect of increasing the strength of steel by precipitation strengthening, and they may be added whenever necessary. The effect described above can be obtained when at least one of Ti, Nb, and V is contained at the total content of 0.01 mass percent or more. On the other hand, even when the total content of at least one of the elements described above is more than 0.3 mass percent, the strength is excessively increased, and as a result, the ductility is degraded. Hence, the total content of at least one of Ti, Nb, and V is preferably defined in the range of from 0.01 to 0.3 mass percent.

### (e): at least one of Ca and REM at the total content of 0.01 mass percent or less

Ca and REM each have a property of controlling the structure of a sulfide interstitial material, and by this property, an effect of improving the elongation flange property of steel can be obtained. The effect described above cannot be further improved when the total content of at least one of Ca and REM is more than 0.01 mass percent. Hence, the total content of at least one of Ca and REM is preferably defined to be 0.01 mass percent or less. More preferably, at least one of Ca and REM may be added at the content in the range of from 0.001 to 0.005 mass percent.

In addition, the balance other than the chemical components described above includes Fe and inevitable impurities. As the inevitable impurities, for example, 0.05 mass percent or less of P and 0.02 mass percent or less of S may be accepted.

Next, the texture of the steel sheet will be described in detail.

### Texture of Hot-Rolled Steel Sheet

The texture is a composite texture formed a primary phase of ferrite and a secondary phase, the secondary phase contains 80 percent by volume or more of bainite, and the balance contains at least one of martensite, retained austenite, and perlite.

Since the texture of the hot-rolled steel sheet used as a raw material contains bainite as a secondary phase, the breaking of the secondary phase is likely to occur in cold rolling, and finer grains are formed in the final texture; hence, the amount of retained γ is increased, and in accordance with this increase, the ductility is effectively improved. When the content of bainite in the secondary phase is decreased to less than 80 percent by volume, and the amount of martensite is increased, the breaking of the secondary phase is unlikely to occur in cold rolling, and the secondary phase finally obtained becomes large and coarse, resulting in decrease in ductility. In addition, when the amount of perlite is increased, cementite is not redissolved in first heating treatment and precipitates, C is consumed in the form of cementite, the amount of the retained γ is decreased, and as a result, the ductility is decreased.

In this embodiment, the primary phase means a phase at a content of 50 percent by volume or more.

Ratio (hereinafter referred to as "aspect ratio) of the average length of the secondary phase in the thickness direction to that in the rolling direction being 0.7 or more

When the secondary phase of a hot-rolled steel texture has an aspect ratio of less than 0.7, that is, has a stretched shape, the secondary phase finally obtained is produced in line at the position along the original secondary phase, and hence fatigue cracks disadvantageously grow, thereby decreasing the fatigue resistance. Accordingly, the aspect ratio of the secondary phase is set to 0.7 or more. The upper limit of the aspect ratio is not specifically defined; however, since the average length of the secondary phase in the rolling direction is unlikely to be smaller than that in the thickness direction in practice, the upper limit of the aspect ratio is practically 1.0.

### Final Texture

The present invention is characterized in that by using a hot-rolled steel sheet having the composition and the texture described above as a raw material, cold rolling, heat treatment, and plating are performed so as to manufacture a hot-dip zinc-plated steel sheet having a desired final texture.

As the final texture, a composite texture is preferable which is composed of tempered martensite, retained austenite, ferrite, and a low-temperature transformation phase.

In this embodiment, the tempered martensite mentioned above is a phase produced when lath-shaped martensite is heated. This tempered martensite has a uniformly fine structure after that of the lath-shaped martensite before tempering. Since softened by tempering so as to have sufficient plastic deformability, the tempered martensite is a phase which effectively improves the ductility of a high tensile steel sheet.

The hot-dip zinc-plated steel sheet obtained in accordance with the manufacturing method of the present invention preferably contains 20 percent by volume or more of the tempered martensite phase described above. The reason for this is that when the content of the tempered martensite is less than 20 percent by volume, a significant improvement in ductility cannot be expected.

In addition, the retained austenite is strain-induced transformed into martensite in processing so that stress locally applied thereto in processing is widely dispersed, and as a result, an effect of improving the ductility of a steel sheet can be obtained. The steel sheet obtained by the manufacturing method of the present invention preferably contains the retained austenite described above at a content of 3 percent by volume or more. That is, when the amount of the retained austenite is less than 3 percent by volume, a significant improvement in ductility cannot be expected.

In addition, in the final composite texture, phases other than the tempered martensite and the retained austenite are ferrite and a low-temperature transformation phase.

Ferrite is a soft phase containing no carbides, has high deformability, and improves the ductility of a steel sheet. Accordingly, the content of ferrite in the final composite texture is preferably 30 percent by volume or more.

In addition, the low-temperature transformation phase of the present invention is non-tempered martensite or bainite. Both martensite and bainite are hard phases and increase the strength of a steel sheet. Since the ferrite which is a soft phase and the low-temperature transformation phase which is a hard phase form the composite texture together with the tempered martensite and the retained austenite, a fine structure including both the soft phase and the hard phase is formed, and the increase in ductility of a steel sheet and the decrease in yield ratio thereof can be realized, thereby significantly improving the formability of the steel sheet.

The weight per unit area of the hot-dip zinc-plated steel sheet may be appropriately determined by the requirements, such as corrosion resistance, in accordance with applications, and is not necessary to be specifically defined. For example, as for a steel sheet used for structural parts of automobiles, the thickness (weight per unit area) of a hot-dip zinc-plated steel sheet is preferably set to 30 to 60 g/m².

Next, each of the steps of a manufacturing method of a hot-dip zinc-plated steel sheet will be described in detail. The hot-dip zinc-plated steel sheet mentioned above has the final texture described above and is manufactured by using a hot-rolled steel sheet as a raw material which has the composition and the texture described above.

First, molten steel having the composition described above is formed, and by continuous casting or the like, a slab or the like is obtained as a steel material for rolling.

Subsequently, after heating followed by rough rolling is performed for this steel material to form a sheet bar in accordance with a general procedure for this type of steel sheet, hot rolling is performed as finish rolling in which a hot-rolled steel sheet having a desired thickness is obtained and is then coiled. In this hot rolling step, when being cooled at a cooling rate of 10 °C/s or more after rolling and then being coiled at a temperature of 300 to 550°C, the hot-rolled steel sheet is able to have the texture described above.

That is, in an object material of the present invention having a composition in which an alloying element such as Mn is present at a high content, segregation of the alloying element occurs in casting. In addition, when the cooling rate is less than 10 °C/s or the coiling temperature is more than 550°C, ferrite is liable to be produced in areas other than the segregation portion, and as a result, the segregation portion remains as a secondary phase. Accordingly, the secondary phase of the hot-rolled sheet has a stretched shape, the secondary phase finally obtained is produced in line at the position along the original secondary phase, and fatigue crack is liable to grow, resulting in decrease of fatigue resistance. In addition, when the coiling temperature is less than 300°C, martensite in the secondary phase of the hot-rolled sheet is increased, breaking of the secondary phase is unlikely to occur in cold rolling, the secondary phase finally obtained grows large and coarse, resulting in decrease in ductility. Hence, a cooling rate of 10 °C/s or more and a coiling temperature in the range of from 300 to 550°C are defined.

After the hot rolling described above, cold rolling is performed to form a cold-rolled steel sheet. In addition, whenever necessary, pickling, annealing, or the like may be performed. Subsequently, the steel sheet is processed by a first process in which a texture containing martensite is formed by first heating treatment followed by cooling; a second process in which second heating treatment is performed in a continuous hot-dip plating line so as to temper the martensite formed in the first process and to produce retained austenite and a low-temperature transformation phase; and a subsequent third process in which hot-dip zinc plating treatment is performed. Accordingly, a high tensile hot-dip zinc-plated steel sheet having superior ductility can be obtained. Hereinafter, these three processes will be described in detail. First Process

In the first process, after the first heating treatment is performed so that the a steel sheet is held at a temperature in the range of an A_{c1} transformation point or more for at least 5 seconds, the steel sheet is quenched to a temperature of an Ms point or less at a cooling rate of 10 °C/s or more. By this first process, 20 percent by volume or more of lath-shaped martensite is produced in the steel sheet. That is, in order to obtain uniformly fine tempered martensite, a texture having a lath-shaped martensite is formed as a texture to be processed.

In the first process, when the holding temperature (first heating temperature) in the first heating treatment is less than the A_{c1} or the holding time is less than 5 seconds, the amount of austenite produced during heating is small, and the amount of lath-shaped austenite obtained after cooling is insufficient. Since the first heating temperature is more than 950°C, the crystal grain diameter is liable to become large and coarse, and hence the temperature is preferably set to 950°C or less. In addition, the cooling rate after the first heating treatment is less than 10 °C/s, the steel sheet obtained after cooling cannot have a texture containing lath-shaped martensite. In the first process, the upper limit of the cooling rate after the first heating treatment is preferably set to 100 °C/s or less in order to maintain superior shape of the steel sheet. In addition, the holding time is preferably set to 5 to 120 seconds.

### Second Process

In the second process, the steel sheet, in which 20 percent by volume or more of the lath-shaped martensite is produced in the first process, is processed by the second heating treatment at a temperature in the range of from the A_{c1} transformation point to the first heating temperature for 5 to 120 seconds. Subsequently, cooling at a cooling rate of 5 °C/s or more is performed to a temperature of 500°C or less. By this second process, the lath-shaped martensite produced in the first process is formed into tempered martensite, and in addition, in order to produce the retained austenite and the low-temperature transformation phase at the final stage, reaustenization of a part of the steel sheet texture is performed.

In the second process, when the heating temperature (second heating temperature) in the second heating treatment is less than the A_{c1} transformation point, the reaustenization will not occur. In addition, when the heating temperature is the first heating temperature or more, the fine texture produced in the first process grows large and coarse, thereby decreasing the elongation.

When the temperature holding time in the second heating treatment is less than 5 seconds, the reaustenization will not occur sufficiently, and hence the retained austenite cannot be obtained. In addition, when the temperature holding time is more than 120 seconds, the reaustenization proceeds, and as a result, it becomes difficult to obtain a necessary amount of the tempered martensite.

In addition, when the cooling rate after the second heating treatment is less than 5 °C/s, the cooling rate is so slow that the austenite produced in the second heating treatment is transformed into ferrite, perlite, and the like, and as a result, the retained austenite and the low-temperature transformation phase cannot be obtained. In addition, the cooling rate after the second heating treatment is preferably set to 50 °C/s or less in order to maintain favorable shape of the steel sheet.

In addition, this second process is preferably performed in a continuous hot-dip zinc plating line provided with an annealing facility and a hot-dip zinc plating facility. The reason for this is that by using the continuous hot-dip zinc plating line, the third process can be sequentially performed immediately after the second process, and as a result, the productivity can be improved.

### Third Process

In the third process, hot-dip zinc plating treatment is performed for the steel sheet which is processed by the second process, and cooling is then performed to 300°C at a cooling rate of 5 °C/s or more. The hot-dip zinc plating treatment may be performed in accordance with the general conditions for the continuous hot-dip plating line and is not necessary to be specifically defined. However, by plating treatment performed at an extremely high temperature, it is difficult to obtain a necessary amount of the retained austenite. Accordingly, the plating treatment is preferably performed at a temperature of 500°C or less. In addition, when the cooling rate after plating is extremely low, it becomes difficult to ensure the retained austenite. Hence, the cooling rate is preferably set to 5 °C/s or more in the range of from the temperature for plating to 300°C. The upper limit of the cooling rate is preferably set to 50 °C/s. In addition, after the plating treatment, in order to adjust the plating weight per unit area, it is obvious that wiping may be performed whenever necessary.

In addition, after the hot-dip zinc plating treatment, alloying treatment may be performed. In the alloying treatment, after the hot-dip zinc plating treatment, the hot-dip zinc-plated sheet is alloyed by reheating to a temperature in the range of from 450 to 550°C. After the alloying treatment, cooling is preferably performed to 300°C at a cooling rate of 5 °C/s or more. When the alloying is performed at a high temperature, it is difficult to obtain a necessary amount of the retained austenite, and as a result, the ductility of the steel sheet is decreased. Accordingly, the upper limit of the alloying temperature is preferably set to 550°C. In addition, when the alloying temperature is less than 450°C, the alloying rate is low, and hence the productivity is decreased. In addition, when the cooling rate after the alloying treatment is extremely low, it becomes difficult to ensure necessary retained austenite. Hence, the cooling rate is preferably set to 5 °C/s or more in the range of from the temperature for the alloying treatment to 300°C.

In addition, the steel sheet processed by the plating treatment or the alloying treatment may be subjected to refining rolling for adjusting the shape, the surface roughness, and the like. Furthermore, it is obvious that the surface of the steel sheet after plating may be coated with a resin or grease or may be subjected to various coating or the like.

According to the above description, in the hot-dip zinc plating line in which the annealing facility and the plating facility are continuously installed and in which the alloying treatment facility is also continuously installed, in addition to the secondary heating and the hot-dip zinc plating, the alloying treatment of the steel sheet is conducted. However, the processes may be carried out independently from each other or may be carried out by using stand-alone facilities.

### Examples

Steel having the composition shown in Table 1 was melted in a converter and was then formed into a slab by continuous casting. The slab thus formed was hot-rolled under the conditions shown in Tables 2 and 3 to form a sheet having a thickness of 2.6 mm, and after pickling was performed, a steel sheet having a thickness of 1.0 mm was obtained by cold rolling. The texture after hot rolling was composed of 50 to 90 percent by volume of ferrite (primary phase) and a secondary phase, and the volume ratio of bainite in the secondary phase, and the aspect ratio thereof were observed using a scanning electron microscope for the texture confirmation. The results are shown in Tables 4 and 5.

For investigation of a microscopic texture of the steel sheet, the cross-section of the steel sheet in the rolling direction was etched by an ethyl alcohol solution containing nitric acid at a concentration of 3% and was then observed by a scanning electron microscope. By measuring the length of an optional secondary phase in the rolling direction and that in the thickness direction, the aspect ratio was obtained by averaging the data from 20 secondary phases using cross-sectional photographs in each of which the object is shown at a magnification of 1,000. The amounts of ferrite, bainite, and tempered martensite were obtained as the average values from 10 data of individual areas of textures which were each measured by image analysis using a cross-sectional texture at a magnification of 3,000.

Next, these cold-rolled steel sheets were heated and then cooled in a continuous annealing line under the conditions of the first process shown in Tables 2 and 3. Furthermore, the steel sheets treated by the first process were heated, cooled, and held at a constant temperature in a continuous hot-dip zinc plating line under the conditions of the second process shown in Tables 2 and 3. Subsequently, the third process was performed in which after the hot-dip zinc plating treatment was performed, the alloying treatment of the hot-dip zinc-plating film was performed by reheating for some of the steel sheets, followed by cooling.

In the hot-dip zinc plating treatment, after the steel sheet was immersed in a plating bath at a temperature of 475°C and was then pulled out, gas-wiping treatment was performed so that the plating weight per unit area on each surface was 50 g/m², and the alloying treatment was then performed by increasing the temperature to 500°C at a heating rate of 10 °C/s. The holding time for the alloy treatment was controlled so that the iron content of the plating film is 9 to 11 mass percent.

The mechanical properties and the textures of the hot-dip zinc-plated steel sheets thus obtained were measured, and the results are shown in Tables 4 and 5.

The amounts of the retained austenite shown in Tables 4 and 5 were each obtained by the steps of preparing a sample from the steel sheet, polishing it to the center thereof in the thickness direction, and performing measurement of the X-ray diffraction intensity at the center in the thickness direction. The MoKα line was used as incident X-ray; the integrated intensity of diffraction X-ray of each plane, that is, (110), (200), and (211), of ferrite and the integrated intensity of each plane, that is, (111), (200), (220), and (311), of austenite were obtained; the ratios of the integrated intensities of the four austenite planes to those of the three ferrite planes, (110), (200), and (211), i.e., 12 ratios of the integrated intensities, were obtained; and by averaging all the data described above, the volume ratio of the retained austenite was obtained.

In addition, for mechanical properties, a tensile test piece in accordance with JIS No. 5 tensile test piece was used having a width at a parallel portion of 25 mm, a length at a parallel portion of 60 mm, a gage length of 50 mm, and a shoulder radius of 25 mm, and the yield strength (YP), the tensile strength (TS), and the elongation (El) were measured at a stain rate of 0.4 s⁻¹.

In the fatigue test, a test piece was used having a radius R of 30.4 mm at a position to which a stress is applied and a minimum width of 20 mm; a planar bending test with completely reversed bending at a frequency of 20 Hz and a stress ratio of 1 was performed by applying a stress to the test piece used as a cantilever; and the stress exceeded a cycle number of 10⁶ was defined as fatigue limit (FL).

### Industrial Applicability

According to the present invention, a high tensile hot-dip zinc-plated steel sheet can be manufactured, the steel sheet having sufficient ductility used as a raw material for automobile parts and superior fatigue resistance.

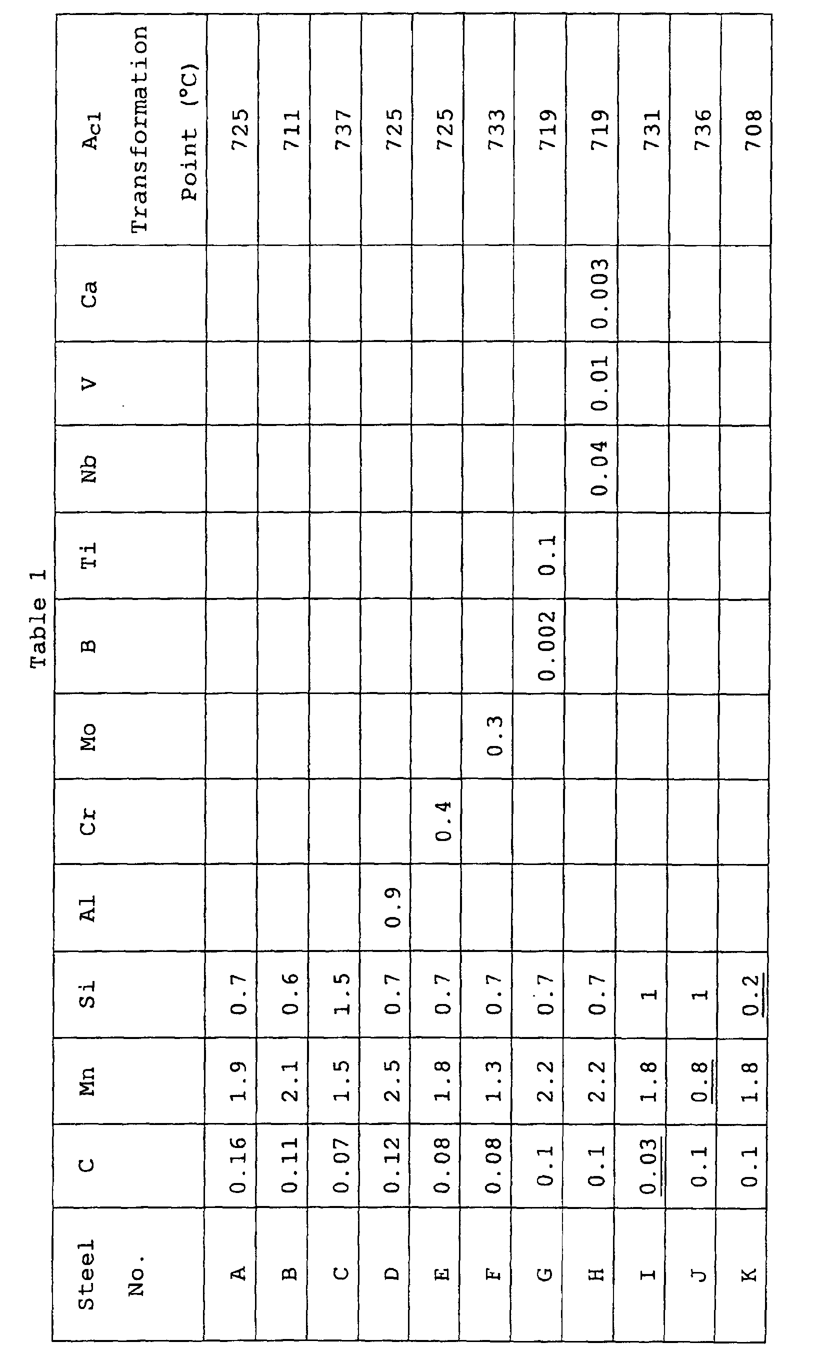

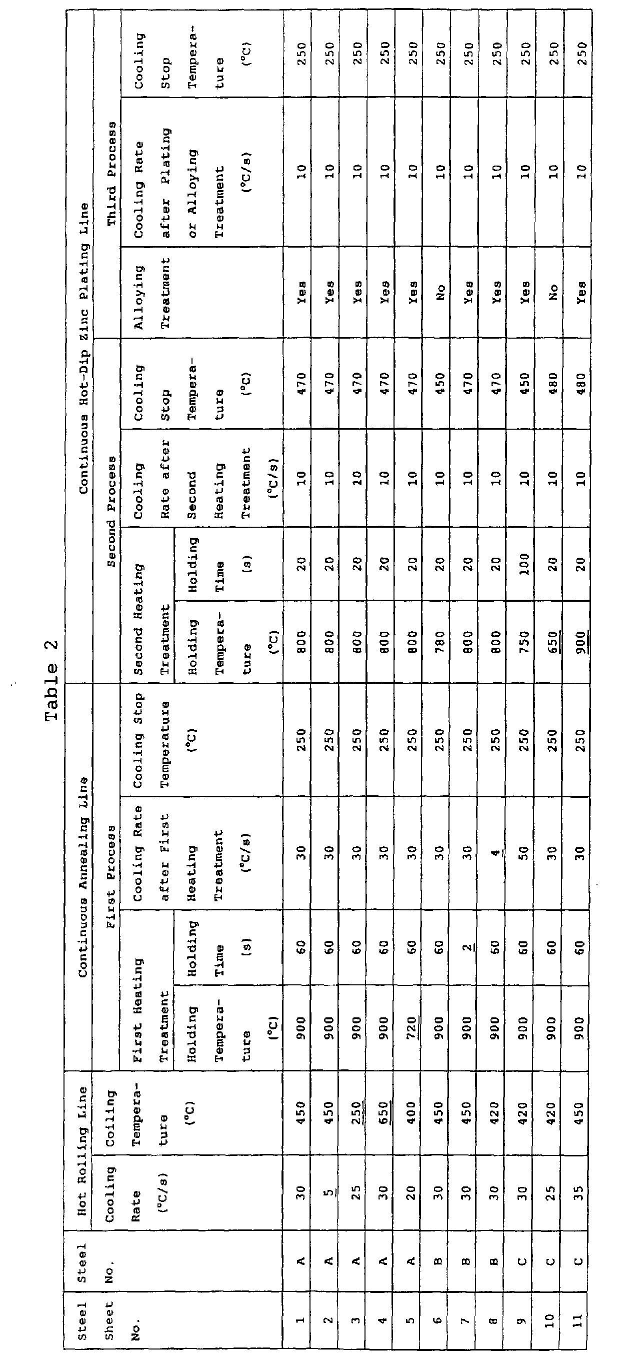

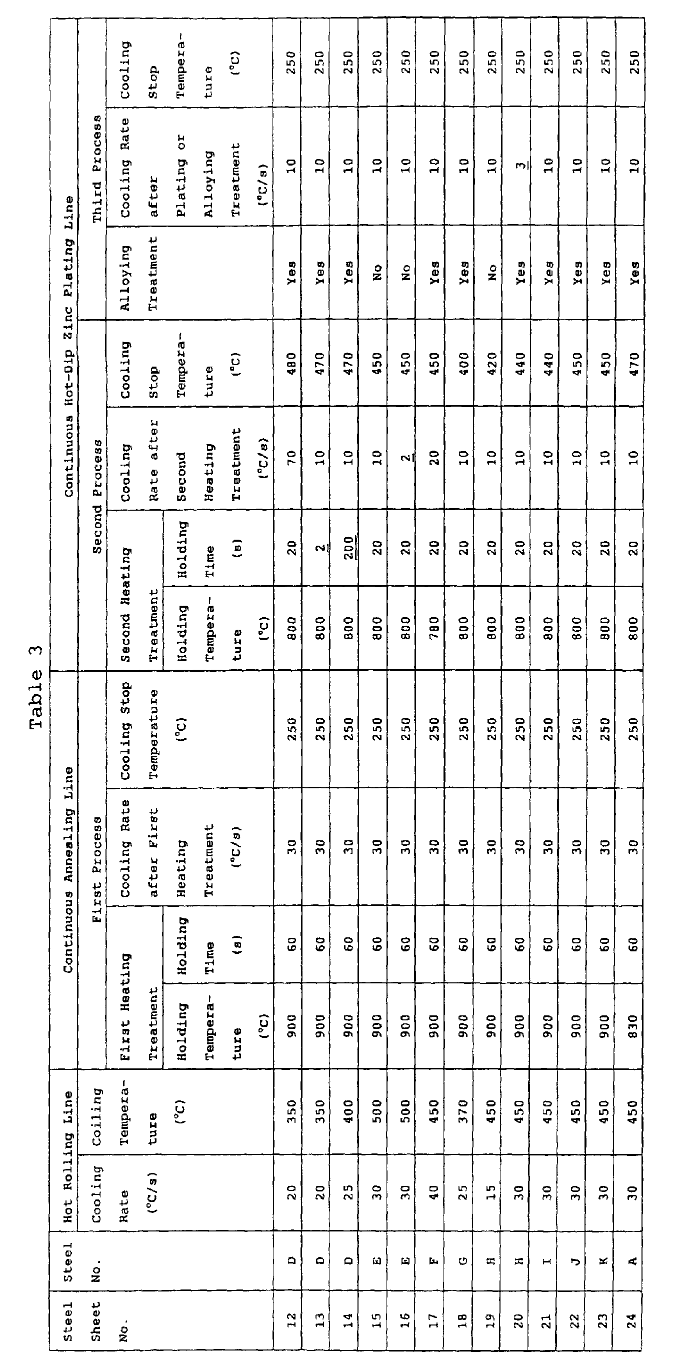

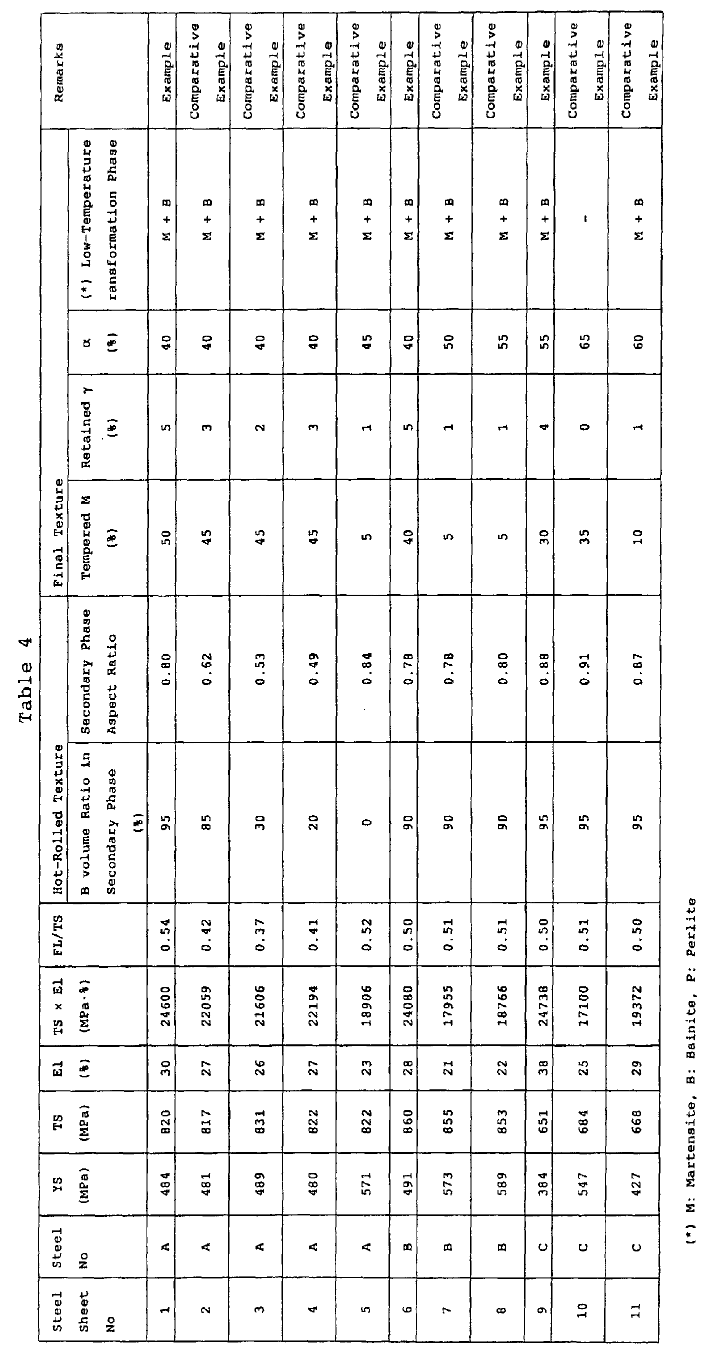

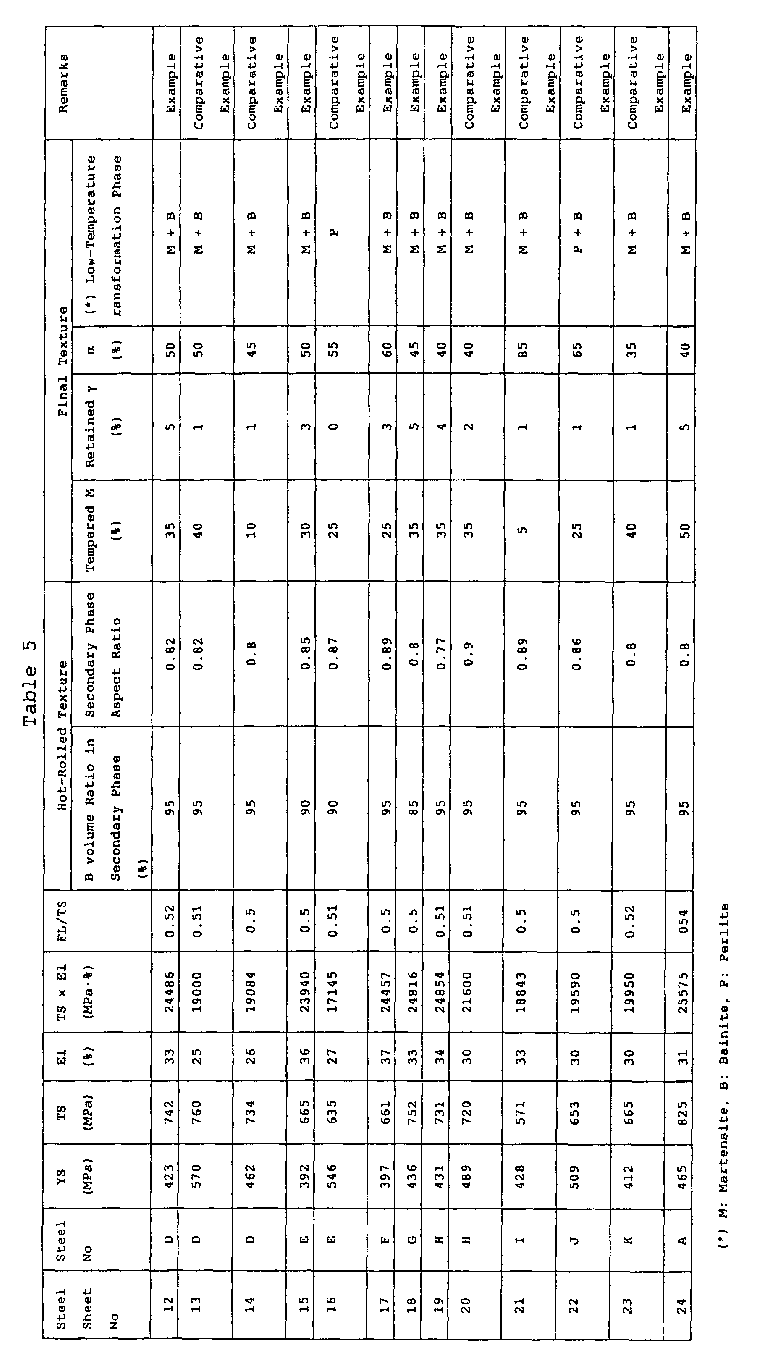

## Claims

1. A method for manufacturing a high tensile hot-dip zinc-plated steel sheet having superior ductility and fatigue resistance, comprising: heating a steel material containing 0.05 to 0.20 mass percent of C, 0.3 to 1.8 mass percent of Si, 1.0 to 3.0 mass percent of Mn, and the balance of Fe and inevitable impurities, followed by hot rolling; cooling the hot-rolled steel sheet at a cooling rate of 10 °C/s or more; coiling the cooled steel sheet at a temperature of from 300 to 550°C; then performing first heating treatment at a temperature of an A_{c1} transformation point or more for 5 seconds or more; then performing cooling to a temperature of an Ms point or less at a cooling rate of 10 °C/s or more; then performing second heating treatment at a temperature in the range of from the A_{c1} transformation point to the first heating temperature for 5 to 120 seconds; then performing cooling to a temperature of 500°C or less at a cooling rate of 5 °C/s or more, followed by hot-dip zinc plating treatment; and then performing cooling to a temperature of 300°C at a cooling rate of 5 °C/s or more.

2. The method for manufacturing a high tensile hot-dip zinc-plated steel sheet having superior ductility and fatigue resistance, according to Claim 1, wherein the steel texture after hot rolling has a composite micro structure containing a primary phase of ferrite and a secondary phase, the secondary phase includes 80 percent by volume or more of bainite and the balance containing at least one of martensite, retained austenite, and perlite; and the ratio of the average length of the secondary phase in the thickness direction to that in the rolling direction is 0.7 or more.

3. A method for manufacturing a high tensile hot-dip zinc-plated steel sheet having superior ductility and fatigue resistance, comprising: after the hot-dip zinc-plated film is formed by the hot-dip zinc plating treatment according to Claim 1 or 2, performing reheating to a temperature in the range of from 400 to 550°C for alloying the hot-dip zinc-plated film; and then performing cooling to a temperature of 300°C at a cooling rate of 5 °C/s or more.

4. The method for manufacturing a high tensile hot-dip zinc-plated steel sheet having superior ductility and fatigue resistance, according to Claim 1 or 2, wherein the steel material has a composition further containing at least one component selected from the group consisting of the following (a) to (e).
They are:
(a) Al at a content of 0.2 to 1.5 mass percent;
(b) at least one of Cr and Mo at a total content of 0.05 to 1.0 mass percent;
(c) B at a content of 0.003 mass percent or less;
(d) at least one selected from the group consisting of Ti, Nb, and V at a total content of 0.01 to 0.3 mass percent; and
(e) at least one of Ca and REM at a total content of 0.01 mass percent or less.

5. The method for manufacturing a high tensile hot-dip zinc-plated steel sheet having superior ductility and fatigue resistance, according to Claim 3, wherein the steel material has a composition further containing at least one component selected from the group consisting of the following (a) to (e).
They are:
(a) Al at a content of 0.2 to 1.5 mass percent;
(b) at least one of Cr and Mo at a total content of 0.05 to 1.0 mass percent;
(c) B at a content of 0.003 mass percent or less;
(d) at least one selected from the group consisting of Ti, Nb, and V at a total content of 0.01 to 0.3 mass percent; and
(e) at least one of Ca and REM at a total content of 0.01 mass percent or less.
